(19) Europäisches Patentamt
European Patent Office
Office européen des brevets

(11) Veröffentlichungsnummer: **0 017 769**
**B1**

(12) # EUROPÄISCHE PATENTSCHRIFT

(45) Veröffentlichungstag der Patentschrift: **14.10.81**

(51) Int. Cl.³: **C 09 B 29/36,** D 06 P 1/18, D 06 P 3/54

(21) Anmeldenummer: **80101375.6**

(22) Anmeldetag: **17.03.80**

(54) **Farbstoffe der Thiazolreihe und ihre Verwendung.**

(30) Priorität: **20.03.79 DE 2910806**

(43) Veröffentlichungstag der Anmeldung: **29.10.80 Patentblatt 80/22**

(45) Bekanntmachung des Hinweises auf die Patenterteilung: **14.10.81 Patentblatt 81/41**

(84) Benannte Vertragsstaaten: **CH DE FR GB IT**

(56) *Entgegenhaltungen:*
**DE-A-1 812 982**
**DE-A1-2 738 885**
**DE-A1-2 746 444**
**DE-A1-2 816 507**
**DE-A1-2 816 629**

(73) Patentinhaber: **BASF Aktiengesellschaft, Carl-Bosch-Strasse 38, D-6700 Ludwigshafen (DE)**

(72) Erfinder: **Eilingsfeld, Heinz, Dr., Pierstrasse 9A, D-6710 Frankenthal (DE)**
Erfinder: **Hansen, Günter, Dr., Mundenheimer Strasse 168, D-6700 Ludwigshafen (DE)**
Erfinder: **Seybold, Guenther, Dr., Otto-Dill-Strasse 32, D-6700 Ludwigshafen (DE)**

EP 0 017 769 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Farbstoffe der Thiazolreihe und ihre Verwendung.

Die Erfindung betrifft Farbstoffe der allgemeinen Formel I

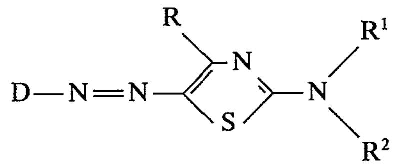

(I)

in der

D der Rest einer aromatischen Diazokomponente,
R ein heterocyclischer Rest und
$R^1$ und $R^2$ Wasserstoff oder gegebenenfalls substituierte Kohlenwasserstoffreste sind, die zusammen auch einen gegebenenfalls heterocyclischen Ring bilden können.

Als Substituenten der Reste D sind z. B. Fluor, Chlor, Brom, $C_1$- bis $C_8$-Alkyl, gegebenenfalls substituiertes Phenyl, $C_1$- bis $C_8$-Alkoxy, gegebenenfalls substituiertes Phenoxy, $C_1$- bis $C_4$-Alkylsulfonyl, gegebenenfalls substituiertes Phenylsulfonyl, gegebenenfalls substituiertes Alkoxy-, Aroxy- oder Aminocarbonyl oder Aminosulfonyl, Cyan, Nitro oder Trifluormethyl zu nennen.

Einzelne Substituenten sind neben den bereits genannten beispielsweise:

Methyl, Äthyl, n- oder i-Propyl, n- oder i-Butyl, Amyl, Hexyl, Octyl, Phenyl, p-Chlorphenyl, Methoxy, Äthoxy, Butoxy, 2-Äthylhexoxy, Phenoxy, 4-Methyl-phenoxy, 4-Methoxy-phenoxy, Methylsulfonyl, Äthylsulfonyl, Phenylsulfonyl, 2-Chlor-phenylsulfonyl, Methoxycarbonyl, Äthoxycarbonyl, Hexoxycarbonyl, 2-Äthylhexoxycarbonyl, Methoxyäthoxycarbonyl, Phenoxycarbonyl, 4-Chlorphenoxycarbonyl, 4-Methoxyphenoxycarbonyl, Methylaminocarbonyl, Äthylaminocarbonyl, Butylaminocarbonyl, Phenylaminocarbonyl.

Einzelne bevorzugte Diazokomponenten sind z. B.:

2-Chlor-4-nitranilin, 2-Cyan-4-nitranilin, 2-Methylsulfonyl-4-nitranilin, 2,4-Dinitro-6-bromanilin, 2,4-Dinitro-6-chloranilin, 2,6-Dichlor-4-nitranilin, 2,6-Dibrom-4-nitranilin, 2-Cyan-6-chlor-4-nitranilin-2-Cyan-6-brom-4-nitranilin, 2,6-Dicyan-4-nitranilin, 2,4-Dinitro-6-methoxycarbonyl-4-nitranilin, 2,4-Dinitro-6-methylsulfonyl-4-nitranilin, 2,4-Dinitro-6-cyananilin, 4-Nitro-1-amino-naphthalin, 1-Aminoanthrachinon.

Von diesen sind aus technischen Gründen wiederum die folgenden besonders bevorzugt:

2,4-Dinitro-6-cyananilin, 2-Brom-4-nitro-6-cyan-anilin, 2,4-Dinitro-6-brom-anilin, 2,4-Dinitro-6-chlor-anilin und 2,6-Dicyan-4-nitranilin.

Heterocyclische Reste R stammen z. B. aus der Furan-, Thiophen-, Thiazol-, Pyrrol-, Indol-, Dioxolan-, Thiophthen-, Pyridin- oder Chinolinreihe, die z. B. durch F, Cl, Br, gegebenenfalls substituiertes $C_1$- bis $C_8$-Alkyl, $C_3$- bis $C_5$-Alkenyl, $C_7$- bis $C_{10}$-Aralkyl, gegebenenfalls substituiertes Phenyl, $C_1$- bis $C_8$-Alkoxy, $C_1$- bis $C_8$-Alkylmercapto, Nitro, Cyano, $C_1$- bis $C_8$-Alkoxycarbonyl, $C_1$- bis $C_8$-Alkylsulfonyl, Dialkylamino oder Acylamino substituiert sein können.

Einzelne Reste R sind beispielsweise:

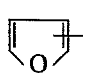
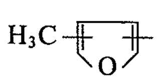
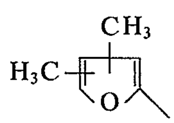
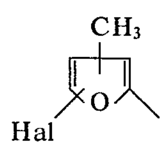
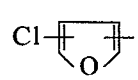
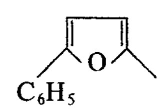

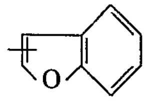
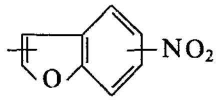
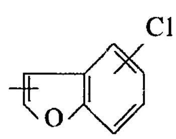
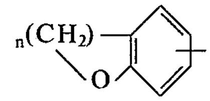
n = 2–4
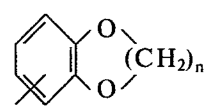
n = 1–3

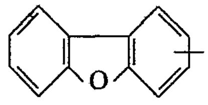
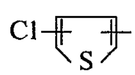
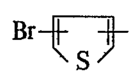
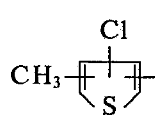
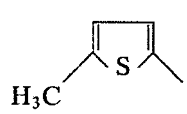

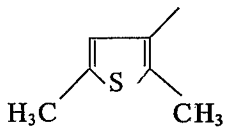
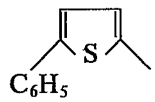
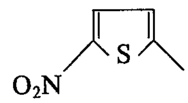
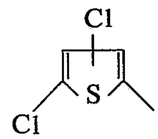
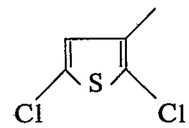
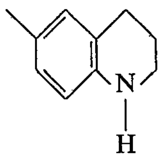
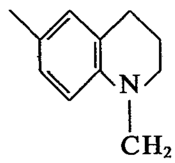
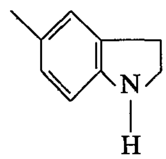
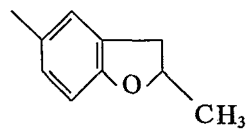
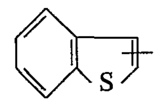
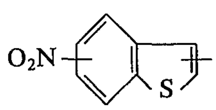
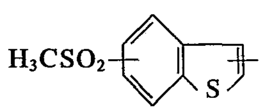
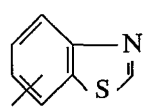
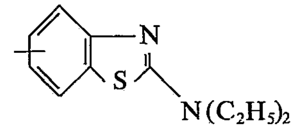
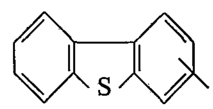
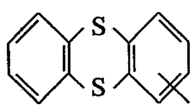
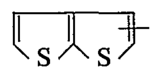
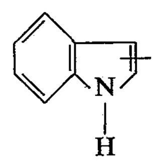
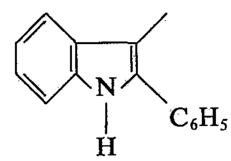
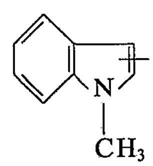
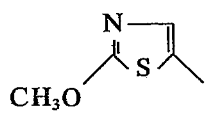
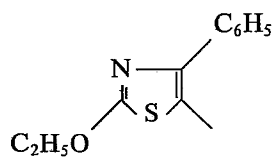
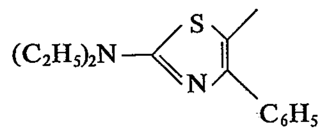
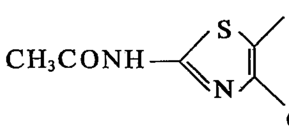
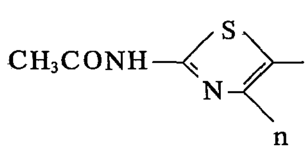
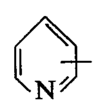 oder 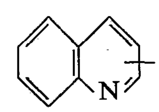

Als Reste $R^1$ und $R^2$ sind neben Wasserstoff z. B. gegebenenfalls substituierte Alkyl-, Alkenyl-, Alkinyl-, Cycloalkyl-, Aralkyl- oder Arylreste, die in der Regel 1 bis 8 C-Atome haben und für die als Substituenten die in Azofarbstoffen üblichen in Betracht kommen.

Insbesondere sind als Reste $R^1$ und $R^2$ $C_1$- bis $C_8$-Alkyl, gegebenenfalls durch Cyan, Hydroxy, Alkoxy mit 1 bis 8 C-Atomen, Phenoxy, Phenoxyäthoxy oder Benzyloxy substituiertes Alkyl, Allyl, Cyclohexyl, Benzyl, Phenyläthyl, Phenylhydroxyäthyl, Phenylpropyl, Phenylbutyl, gegebenenfalls durch Chlor, Methyl, Methoxy oder Äthoxy substituiertes Phenyl sowie Polyalkoxyalkyl, Hydroxypolyalkoxyalkyl, Alkanoyloxyalkyl oder Alkoxycarbonylalkyl der nachstehend genannten Art zu nennen.

Einzelne Reste $R^1$ und $R^2$ sind beispielsweise die Alkylreste Methyl, Äthyl, Propyl, Butyl, die Hydroxyalkylreste $\beta$-Hydroxyäthyl oder -propyl, $\gamma$-Hydroxypropyl, $\omega$-Hydroxyhexyl, $\beta$-$C_1$- bis $C_4$-Alkoxycarbonyläthyl sowie die Reste der Formeln

$$-CH_2-CH_2-O-CH_2-CH_2-OH \qquad -(CH_2)_3-O-(CH_2)_4-OH$$

$$-(CH_2)_3-O-(CH_2)_6-OH$$

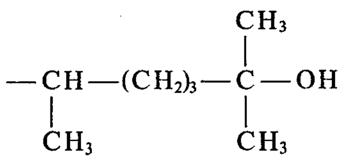 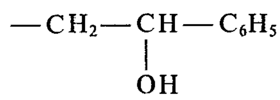 $CH_2CH_2CN$ $CH_2CH{=}CH_2$

$CH_2CH_2OCONH$($C_1$- bis $C_4$-Alkyl) 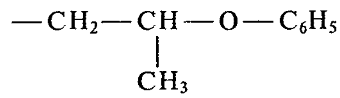 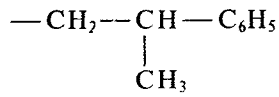

$-(CH_2)_3-O-CH_2-C_6H_5$ $-CH_2-CH_2-O-CH_3$

$-CH_2-CH_2-CH_2-OCH_3$ $-(CH_2)_3-O-(CH_2)_2-O-CH_3$,

$-(CH_2)_3-O-CH(CH_3)_2$

und die Acyloxyalkyreste der Formeln

$-CH_2-CH_2-O-Acyl$ $-(CH_2)_3-O-Acyl$ 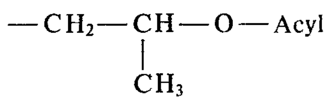

$-(CH_2)_2-O-(CH_2)_2-O-Acyl$

wobei Acyl beispielsweise $-COH$, $-COCH_3$ oder $-COCH_2-O-C_6H_5$ sein kann. Acylreste sind ferner COOB und CONHB, wobei B Methyl oder Phenyl ist.

Zur Herstellung der Verbindung der Formel I kann man eine Diazoverbindung von Aninen der Formel

$$D-NH_2$$

mit Kupplungskomponenten der Formel II

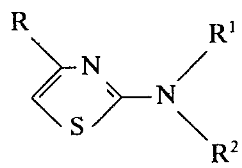

(II)

umsetzen.

Einzelheiten der Herstellung können den Beispielen entnommen werden, in denen sich Angaben über Teile und Prozente, sofern nicht anders vermerkt, auf das Gewicht beziehen.

Die Kupplungskomponenten der Formel II können analog zu dem in der DE-OS 18 12 982 angegebenen Verfahren hergestellt werden.

Die Verbindungen der Formel I sind gelb bis grün und eignen sich insbesondere als Dispersionsfarbstoffe für synthetische und halbsynthetische Fasern, z. B. Celluloseester, Polyamide und insbesondere Polyester. Man erhält Färbungen mit guten Echtheiten, von denen die Licht-, Thermofixier- und Naßechtheiten hervorzuheben sind.

Einige der Farbstoffe der Formel I sind auch für das in der deutschen Patentschrift 18 11 796 beschriebene Verfahren geeignet.

Von besonderer Bedeutung sind Farbstoffe der Formel I a

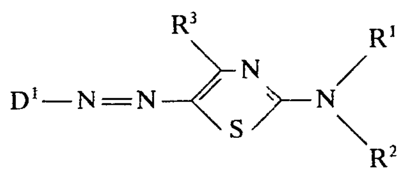

(Ia)

in der

$D^1$ ein gegebenenfalls substituierter Phenylrest und

$R^3$ ein Rest der Formeln

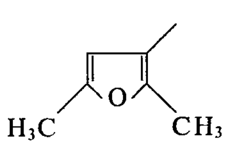 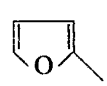 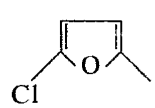 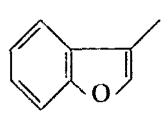 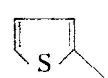

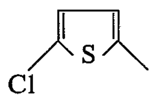 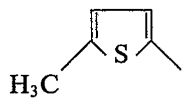 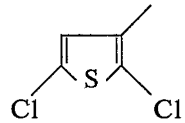 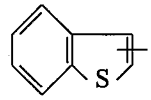 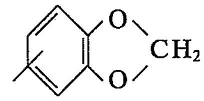

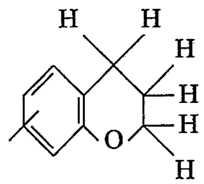 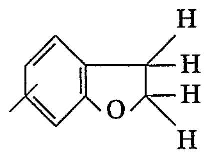

sind $R^1$ und $R^2$ die angegebenen Bedeutungen haben.

Bevorzugte Reste D sind beispielsweise:
4-Nitrophenyl, 2,4-Dinitrophenyl, 2-Cyan-4-nitrophenyl, 2-Chlor-4,6-dinitrophenyl, 2-Brom-4,6-dinitrophenyl, 2-Cyan-4,6-dinitrophenyl, 2-Cyan-6-brom-4-nitrophenyl, 2-Cyan-6-chlor-4-nitrophenyl, 2-Methoxycarbonyl-4,6-dinitrophenyl, 2,4-Dicyan-phenyl, 2-Methylsulfonyl-4-nitrophenyl.
Für $R^3$ sind besonders bevorzugt:

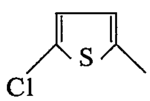 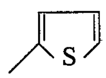 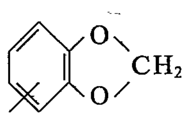 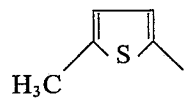 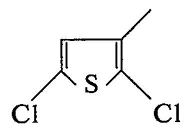

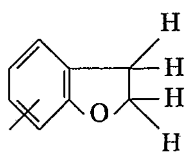

Besonders bevorzugte Reste $R^1$ und $R^2$ sind z. B:

Wasserstoff, Methyl, Äthyl, Propyl, Butyl, Allyl, Benzyl, Cyclohexyl, $\beta$-Äthoxycarbonyläthyl, $\beta$-Cyanäthyl, $\beta$-Hydroxyäthyl, $\beta$-Acetoxyäthyl oder Phenyl.

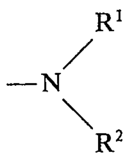 : Morpholino, Pyrrolidino oder Piperidino.

Beispiel 1

7 Teile Natriumnitrit in 50 Teilen Wasser werden einer eiskalten Suspension von 13,8 Teilen 4-Nitroanilin in einer Mischung aus 350 Teilen Wasser und 30 Teilen konzentrierter Salzsäure zugesetzt. Nach zweistündigem Rühren wird der Überschuß an Nitrit durch Harnstoffzusatz entfernt. Eine Lösung von 28,0 Teilen 2-Diäthylamino-4-furanyl-(2)-thiazol werden in 100 Teilen Eisessig gelöst. Man gibt unter Kühlen die Diazoniumlösung zur essigsauren Kupplungslösung, wobei sich der Farbstoff bildet. Nach Rühren über Nacht ist die Kupplung beendet. Man erhält nach Absaugen, Neutralwaschen und Trocknen 31 Teile eines dunkel gefärbten Pulvers, das Polyesterfasern in blaustichig roten Tönen färbt.

Analog Beispiel 1 erhält man auch die in der folgenden Tabelle durch Diazo- und Kupplungskomponente gekennzeichneten Farbstoffe.

| Beispiel | Diazokomponente | Kupplungskomponente | Farbton auf Polyester |
|---|---|---|---|
| 2 | 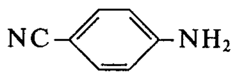 | 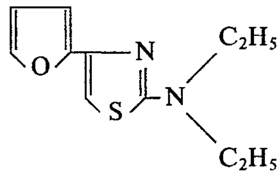 | rot |
| 3 | 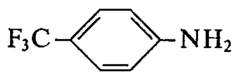 | 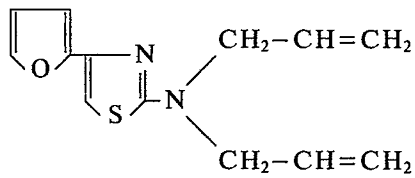 | scharlach |
| 4 | 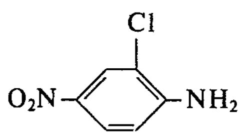 | 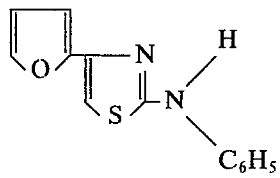 | rotviolett |
| 5 | 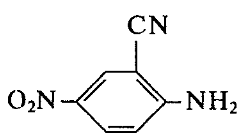 | 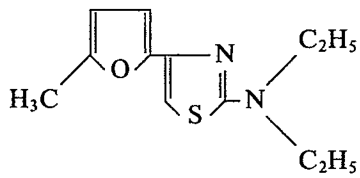 | violett |
| 6 | 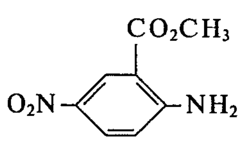 | 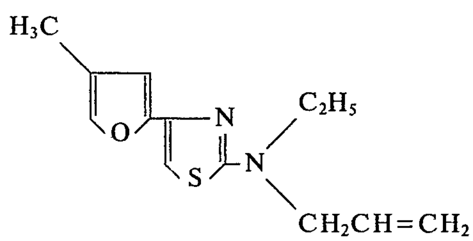 | violett |
| 7 | 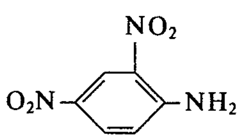 | 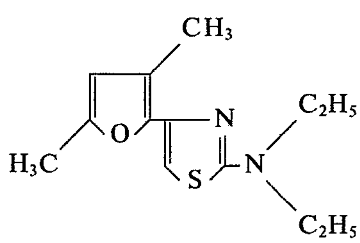 | blauviolett |

(Fortsetzung)

| Beispiel | Diazokomponente | Kupplungskomponente | Farbton auf Polyester |
|---|---|---|---|
| 8 | 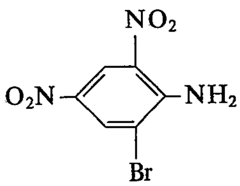 | 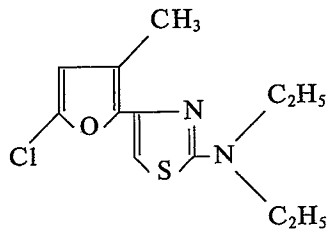 | marine-blau |
| 9 | 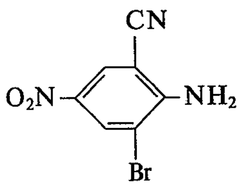 | 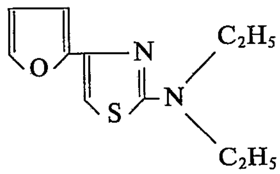 | blau |
| 10 | 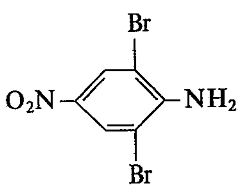 | 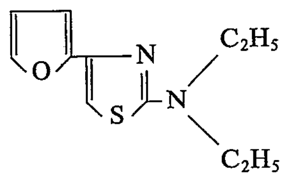 | violett |
| 11 | 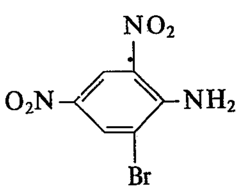 | 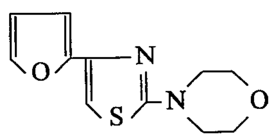 | marine-blau |
| 12 | 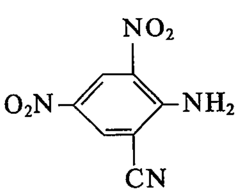 | 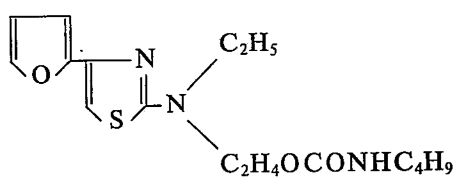 | grün |
| 13 | 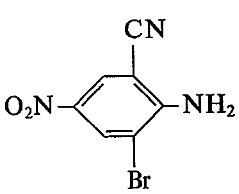 | 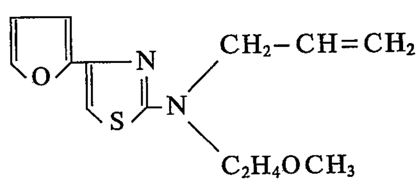 | blau |
| 14 | 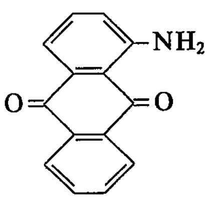 | 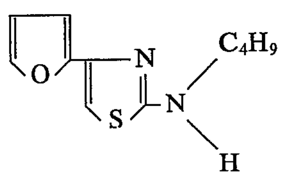 | scharlach |

(Fortsetzung)

| Beispiel | Diazokomponente | Kupplungskomponente | Farbton auf Polyester |
|---|---|---|---|
| 15 | 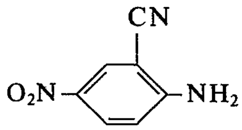 | 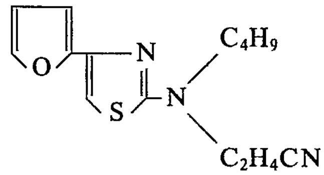 | violett |
| 16 | 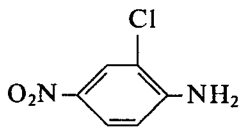 | 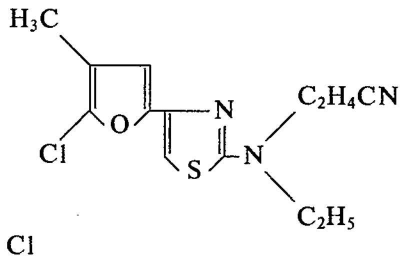 | blaustichig rot |
| 17 | 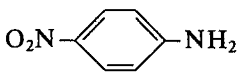 | 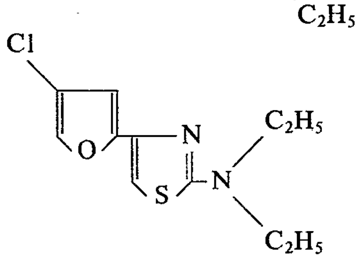 | rot |
| 18 | 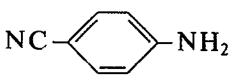 | 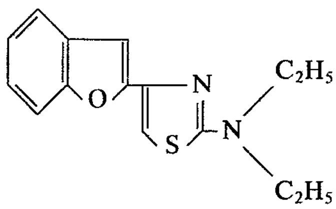 | rot |
| 19 | 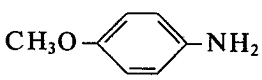 | 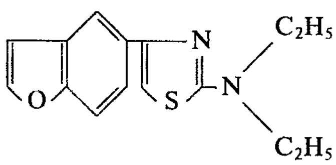 | rot-orange |
| 20 | 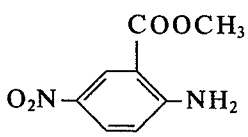 | 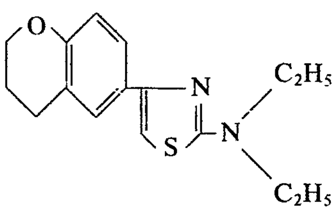 | blaustichig rot |
| 21 | 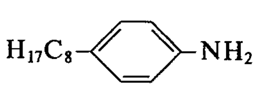 | 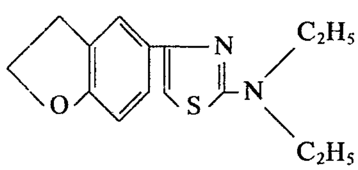 | orange |
| 22 | 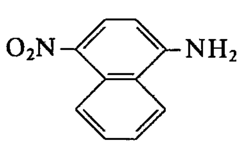 | 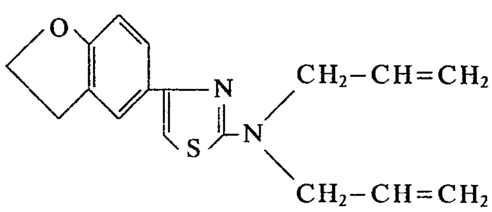 | violett |

## Beispiel 23

10,4 Teile 2,4-Dinitro-6-cyanilin werden bei 10 bis 15°C eingetragen in 70 Teile 85%ige Schwefelsäure. Bei 0 bis 5°C werden 14,8 Teile einer 12,8% $N_2O_3$ enthaltenden Nitrosylschwefelsäure zugegeben. Nach 3- bis 4stündigem Rühren bei 0—5°C wird der Überschuß an Nitrit mit Amidosulfonsäure entfernt und die Diazoniumlösung mit einer Lösung aus 11,9 Teilen 2-Diäthylamino-4-thienyl-(2)-thiazol in 50 Teilen Dimethylformamid, 5 Teilen eines Kondensationsproduktes aus 23 Mol Äthylenoxid und einem teilweise ungesättigten Fettalkoholgemisch und 300 Teilen Eis vereinigt. Nach mehrstündigem Rühren wird der Farbstoff abgesaugt, mit Wasser neutral gewaschen und bei 50°C im Vakuum getrocknet. Man erhält 22 Teile eines dunklen Pulvers, das Polyester in echten grünen Tönen färbt.

| Beispiel | Diazokomponente | Kupplungskomponente | Farbton auf Polyester |
|---|---|---|---|
| 24 | 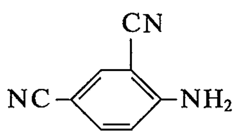 | 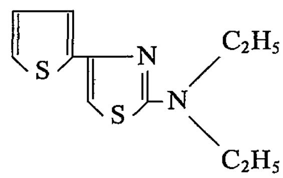 | rotviolett |
| 25 | 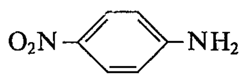 | 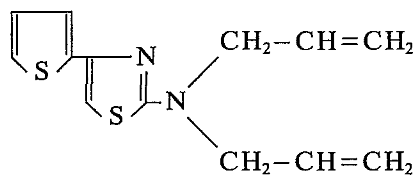 | blaustichig rot |
| 26 | 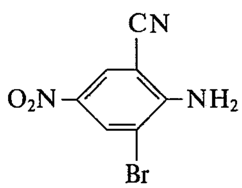 | 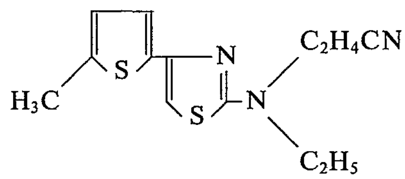 | blau |
| 27 | 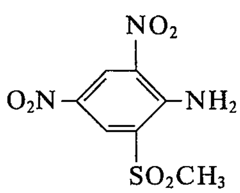 | 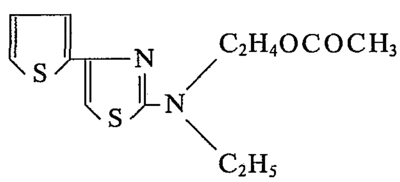 | grün |
| 28 | 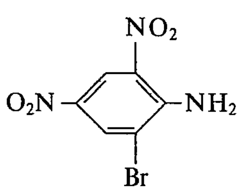 | 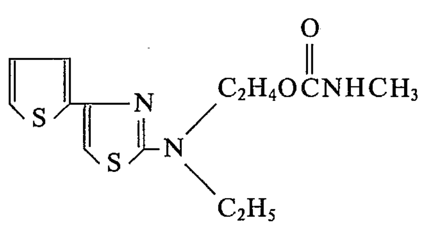 | blau |
| 29 | 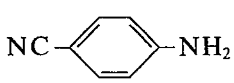 | 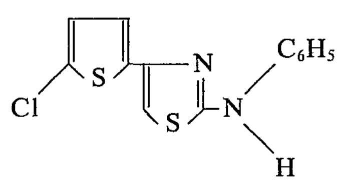 | rot |

(Fortsetzung)

| Beispiel | Diazokomponente | Kupplungskomponente | Farbton auf Polyester |
|---|---|---|---|
| 30 | 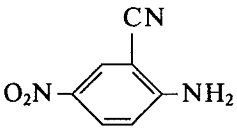 | 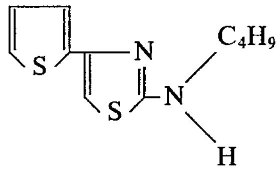 | violett |
| 31 | 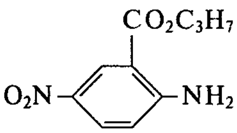 | 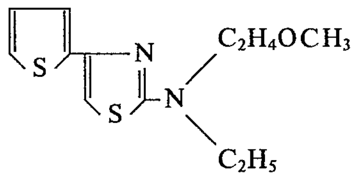 | rotviolett |
| 32 | 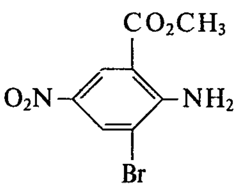 | 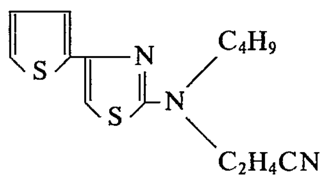 | blauviolett |
| 33 | 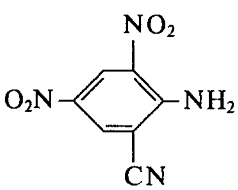 | 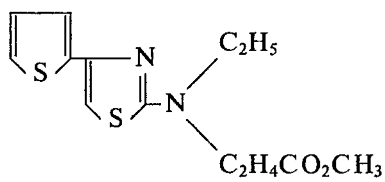 | grün |
| 34 | 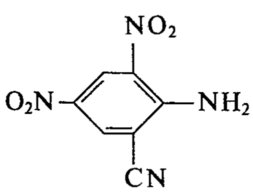 | 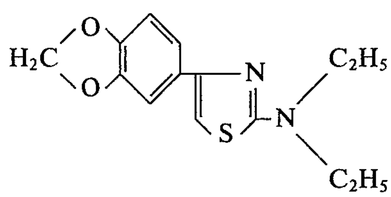 | grün |
| 35 | 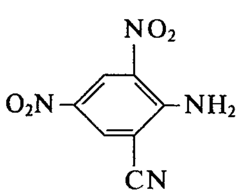 | 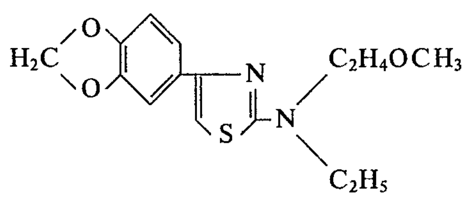 | grün |
| 36 | 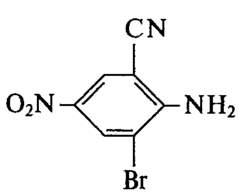 | 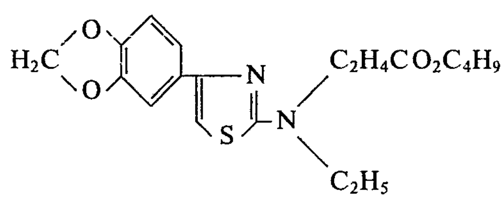 | blau |
| 37 | 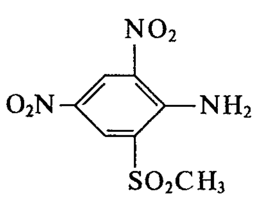 | 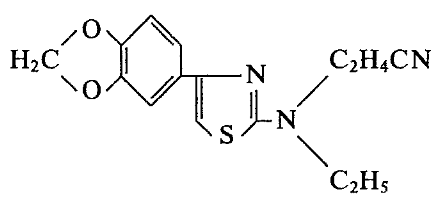 | grün |

(Fortsetzung)

| Beispiel | Diazokomponente | Kupplungskomponente | Farbton auf Polyester |
|---|---|---|---|
| 38 | 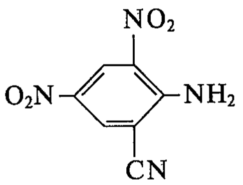 | 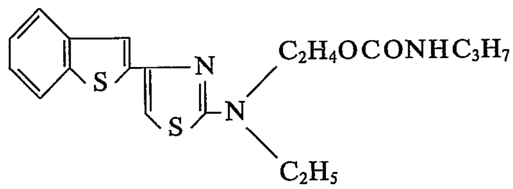 | grün |
| 39 | 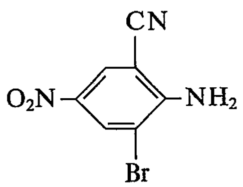 | 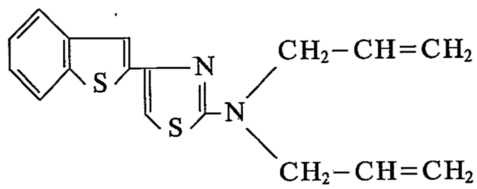 | blau |
| 40 | 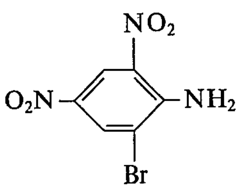 | 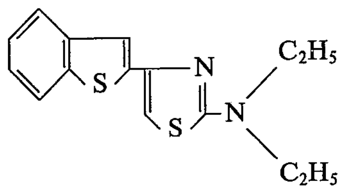 | marine-blau |
| 41 | 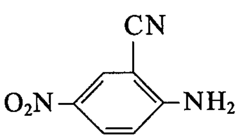 | 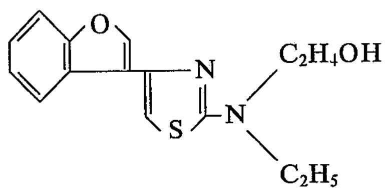 | violett |
| 42 | 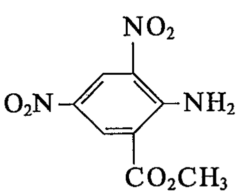 | 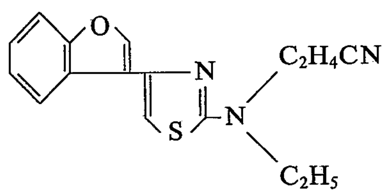 | blau |
| 43 | 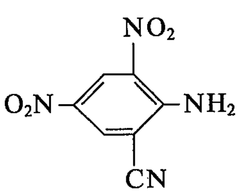 | 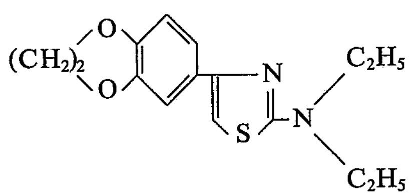 | grün |
| 44 | 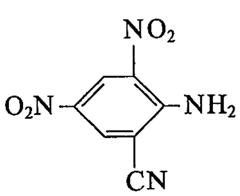 | 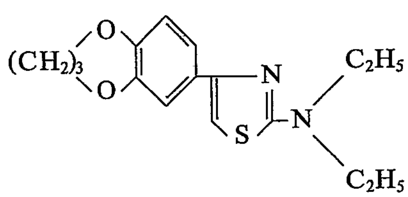 | grün |
| 45 | 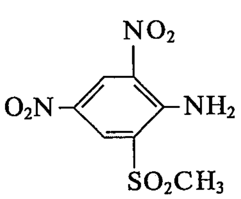 | 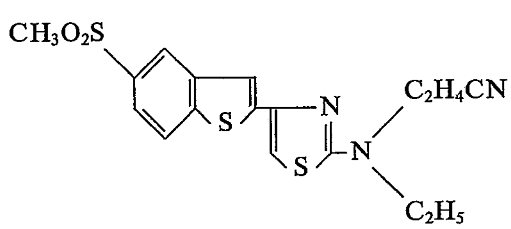 | grün |

(Fortsetzung)

| Beispiel | Diazokomponente | Kupplungskomponente | Farbton auf Polyester |
|---|---|---|---|
| 46 | 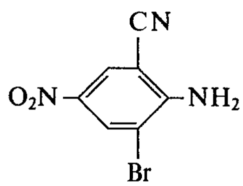 | 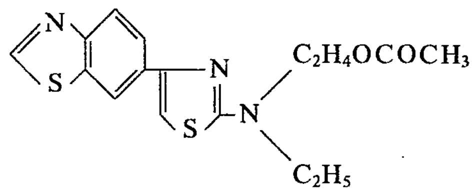 | blau |
| 47 | 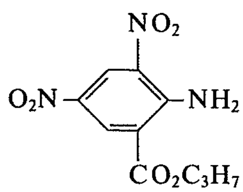 | 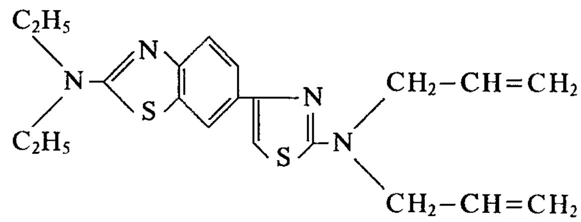 | blau |
| 54 | 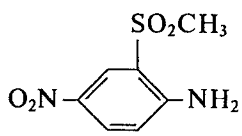 | 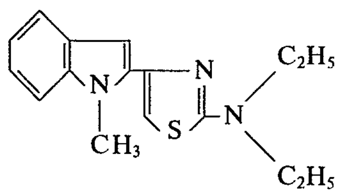 | violett |
| 55 | 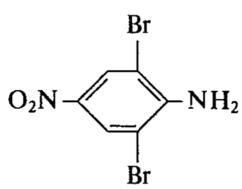 | 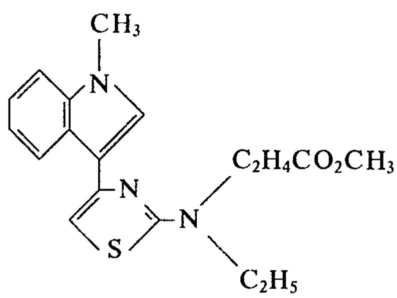 | violett |
| 56 | 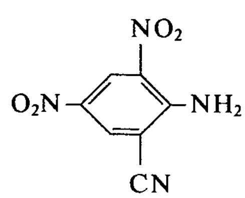 | 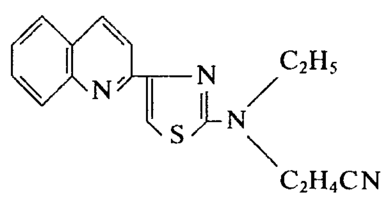 | grün |

## Patentansprüche

1. Farbstoffe der Thiazolreihe der allgemeinen Formel I

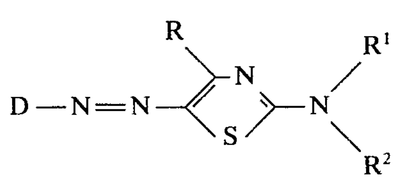

(I)

in der

D der Rest einer aromatischen Diazokomponente,
R ein heterocyclischer Rest und

$R^1$ und $R^2$ Wasserstoff oder gegebenenfalls substituierte Kohlenwasserstoffreste sind, die zusammen auch einen gegebenenfalls heterocyclischen Ring bilden können.

2. Verbindungen gemäß Anspruch 1, in denen

R ein Rest der Furan-, Thiophen-, Dioxan-, Benzofuran-, Dibenzofuran-, Indol-, Chinolin-, Thiazol-, Benzthiazol-, Dibenzothiophen-, Thienothiophen- oder Pyridinreihe ist.

3. Farbstoffe gemäß Anspruch 1 der allgemeinen Formel Ia

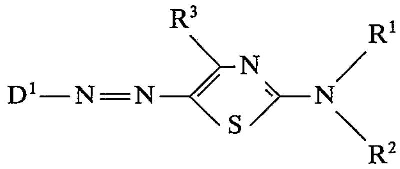

(Ia)

in der

$D^1$ ein gegebenenfalls substituierter Phenylrest und

$R^3$ ein Rest der Formeln

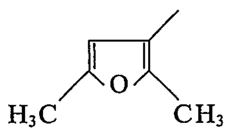
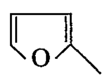
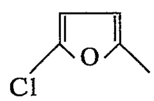
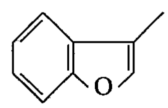
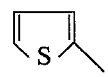
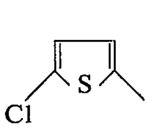
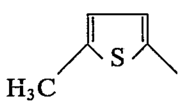
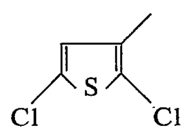
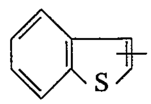
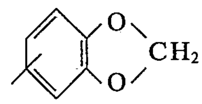
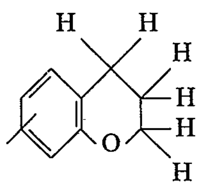
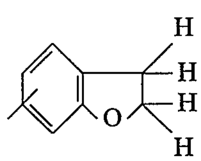

sind $R^1$ und $R^2$ die angegebenen Bedeutungen haben.

4. Verwendung der Verbindungen gemäß Anspruch 1 zum Färben von synthetischen Fasern oder Mischgeweben aus synthetischen Fasern mit Cellulosefasern.

**Claims**

1. A dye of the thiazole series, having the general formula I

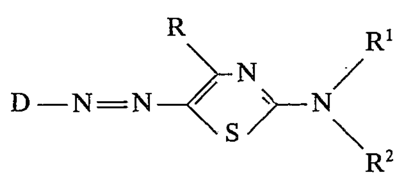

(I)

where

D is the radical of an aromatic diazo component,

R is a heterocyclic radical and

$R^1$ and $R^2$ are hydrogen or unsubstituted or substituted hydrocarbon radicals, which may also together form a ring, which may or may not be heterocyclic.

2. A compound as claimed in claim 1, where R is a radical of the furan, thiophene, dioxane, benzofuran, dibenzofuran, indole, quinoline, thiazole, benzthiazole, dibenzothiophene, thienothiophene or pyridine series.

3. A dye as claimed in claim 1, of the general formula Ia

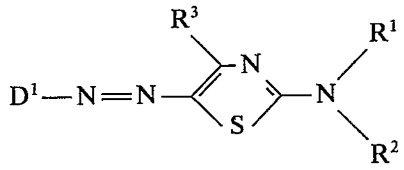

(Ia)

where

D¹ is unsubstituted or substituted phenyl and

R³ is a radical of the formula

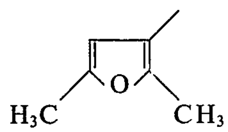
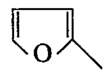
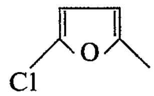
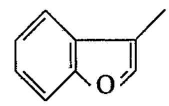
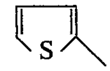
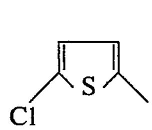
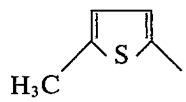
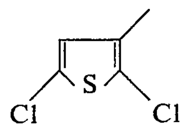
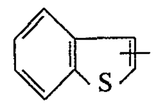
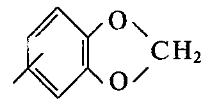
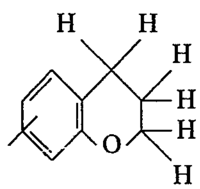
or
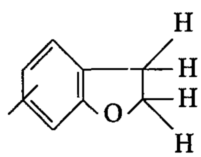
and

$R^1$ and $R^2$ have the stated meanings.

4. Use of a compound as claimed in claim 1 for dyeing synthetic fibers, or union fabrics of synthetic fibers and cellulose fibers.

**Revendications**

1. Colorants de la série thiazolique de formule générale I

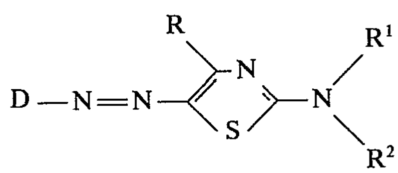

(I)

dans laquelle

D est le radical d'un composant diazoïque aromatique,

R est un radical hétérocyclique et

$R^1$ et $R^2$ sont des atomes d'hydrogène ou des radicaux hydrocarbonés, éventuellement substitués, qui peuvent également former ensemble un noyau éventuellement hétérocyclique.

2. Composés selon la revendication 1, dans lesquels R est un radical des séries furannique, thiofénique, dioxannique, benzofurannique, dibenzofurannique, indolique, quinolénique, thiazolique, benzothiazolique, dibenzothiofénique ou pyridinique.

3. Colorants selon la revendication 1 de formule générale Ia

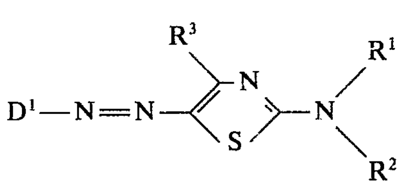

(Ia)

dans laquelle
$D^1$ est un radical phényle éventuellement substitué,
$R^3$ est un radical répondant à l'une des formules suivantes

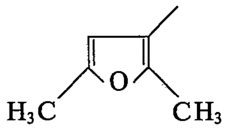 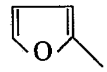 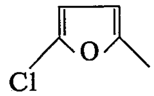 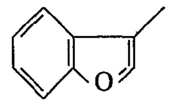 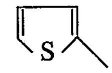

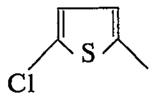 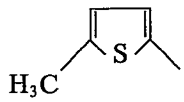 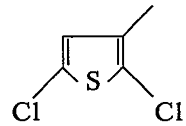 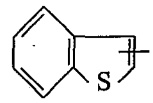 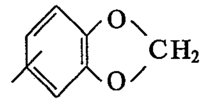

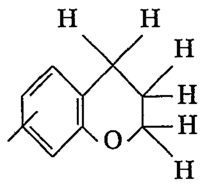 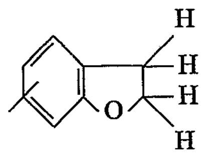

et $R^1$ et $R^2$ ont les significations déjà indiquées.

4. Utilisation des composés selon la revendication 1 pour la teinture de fibres synthétiques ou de tissus mixtes formés de fibres synthétiques et de fibres de cellulose.